# FASCICULE DE BREVET EUROPEEN

(11) **EP 0 827 697 B1**
(45) Date de publication et mention de la délivrance du brevet: **12.06.2002**
(21) Numéro de dépôt: 96202475.8
(22) Date de dépôt: 06.09.1996
(51) Int. Cl.: A23J 3/34, A23L 1/305

(54) **Induction de la tolérance au lait de vache**
Induktion von Toleranz gegen Kuhmilch
Induction of tolerance to cow-milk

(43) Date de publication de la demande: 11.03.1998
(73) Titulaire: SOCIETE DES PRODUITS NESTLE S.A., 1800 Vevey (CH)
(72) Inventeur: Fritsche, Rodolphe, 1814 La Tour-de-Peilz (CH); Pahud, Jean-Jacques, 1801 Mont-Pelerin (CH); Pfeifer, Andrea M.A., 1806 St. Legier (CH)

(56) Documents cités:
- EP-A- 0 022 019
- EP-A- 0 322 589
- EP-A- 0 629 350
- EP-A- 0 631 731
- ROSEN, STEINER, UNANUE: "Dictionary of immunology" 1989 , MACMILLAN , LONDON XP002025092 * page 211, colonne 1 *

## Description

La présente invention concerne la prévention d'une réponse allergique aux produits laitiers.

### Description de la technique antérieure

II est connu que les allergies au lait de vache, ou aux laits contenant du lait de vache adaptés aux besoins des nourrissons, sont dues au fait que les protéines du lait de vache different des protéines du lait maternel, et qu'ils peuvent donc constituer des allergènes. Parmi les protéines du petit-lait, les allergènes principaux connus sont, essentiellement, l'α-lactalbumine (αLA) et la β-lactoglobuline (βLG) et dans une moindre mesure, les immunoglobulines, en particulier les IgG et la sérumalbumine (SAB). Dans ce contexte, Fritsché et al. ont montré que la grande majorité de la capacité de déclenchement d'allergie des compositions de lait est associée à la présence de βLG (Int. Arch. Aller and Appl. Imm., 93, 289-293, 1990).

Des essais ont été conduits pour éliminer le pouvoir allergisant des allergènes identifiés ci-dessus en les convertissant en peptides par hydrolyse.

Par exemple, dans le brevet US4293571, on prépare un hydrolysat protéique par hydrolyse pancréatique, on chauffe l'hydrolysat pour coaguler les protéines non hydrolysées, et on soumet l'hydrolysat à une ultrafiltration pour éliminer les protéines résiduelles et les macropeptides coagulés pouvant constituer des allergènes.

Il a également été proposé dans EP22019, d'hydrolyser directement les protéines de petit-lait dans une installation d'ultrafiltration et de récolter les peptides lorsqu'ils se forment. Cependant, il semble que, même dans ces conditions, il n'est en pratique pas possible d'hydrolyser complètement toutes les protéines de petit-lait.

Enfin, US5039532 décrit un procédé, dans lequel on soumet le petit-lait à une hydrolyse enzymatique partielle au moyen d'enzymes protéolytiques. L'hydrolysat est ensuite soumis à un traitement thermique pour dénaturer les protéines mineures, les rendant ainsi accessibles à une dégradation enzymatique suivante. L'hydrolysat chauffé est alors refroidi, puis est soumi succesivement à une deuxième hydrolyse et à nouveau traitement thermiquement pour inactiver l'enzyme.

Il est vite apparu que l'hydrolyse des protéines de lait, jusqu'à un certain degré d'hydrolyse ou une limite en poids moléculaire, n'est pas une condition suffisante pour rendre un lait hydrolysé suffisament hypoallergénique pour les personnes allergiques, notamment les nourissons. Il faut encore que les protéines soient hydrolysées d'une certaine manière, pour que la réponse allergique soit fortement diminuée. Dans ce contexte, la directive Européenne 96/4/EC stipule que dans un lait hypoallergénique les protéines allergiques doivent être immunologiquement au minimum 100 fois moins détectables que dans un lait non-hydrolysé (Off. J. Europ. Comm., NoL49/12, annexe point 5.a, 1996)

Une méthode de détection du pouvoir allergisant d'un lait a été développé par Fritsché et al. (*Int. Arch. Aller and Appl. Imm.,* 93, 289-293, 1990). Cette méthode peut être aussi aplliquée dans le cadre de la directive Européenne 96/4/EC. Fritsche et al. ont montré que le pouvoir allergisant des compositions de lait de vache peut être déterminé, *in vitro*, par la capacité des mastocystes normaux de rats, sensibilisés passivement par des anticorps de rat anti-protéine de lait de vache, à déclencher la libération de sérotonine ³H). On a ainsi découvert que différentes compositions de lait de vache hydrolysé présentent des capacités fortement réduites de déclenchement des mastocytes par rapport à une composition de lait standard. Par exemple, on observe que le lait commercial pour nourisson BEBA-HA®, qui est une composition de petit-lait hydrolysée comme décrit dans US5039532, ayant un taux d'hydrolyse de 18% (moins de 10000 Dalton), a une capacité de déclenchement des mastocystes 1000 fois inférieure à celle du standard. Par ailleurs, il apparaît que plus l'hydrolyse du lait est poussé, plus l'hypoallergénicité de ce lait est susceptible d'être élevé.

Parallèlement, l'administration orale de protéines intactes a été reconnue comme un moyen efficace pour induire une tolérance immunologique à ces protéines dans certaines situations. Quelques études seulement d'induction de la tolérance orale ont été réalisées sur les humains. A titre d'indications on peut citer les articles de Husby S. et al. (J. Immunol. 4667-70, 1994), de Michael J.G. (Immunol. Invest. 18, 1049-45,1989), de Hachimura S. et al. (Biosc. Biotech. Biochem. 57, 1674-77, 1993), de Pesce A.J. et al. (Int. Arch. Allergy Appl. Immunol., 88-93, 1990) et de Muckerheide A. et al. (J. Immunol. 119, 1340-45, 1977), par exemple.

Dans le domaine de la tolérance orale au lait, EP629350 prétend décrire des formulations hypoallergéniques qui induisent réellement une tolérance aux protéines de lait de vache chez des enfants susceptibles de présenter une allergie au lait de vache. Le taux d'hydrolyse des protéines de lait pouvant induire une tolérance est décrit comme étant de préférence dans l'intervalle de 20% à 32%. Cependant, il ne s'agit que d'affirmations qui ne sont soutenues par aucuns essais démontrant une réelle activité de tolérance. En outre, EP629350 fait clairement le postulat que plus le pouvoir hypoallergénique est elevé, c'est à dire plus le niveau d'hydrolyse est poussé, plus l'induction de la tolérance orale est élevée.

Enfin, JP 3-181681 décrit un procédé d'hydrolyse de laits similaire à celui décrit dans US4293571. Les hydrolysats ainsi obtenus, ayant moins de 10000 dalton, sont en outre capables d'induire une tolérance orale chez des rats. Bien que ces hydrolysats présentent une certaine hypoallergénicité, il faut remarquer qu'ils ne sont pas conformes à la directive Européenne 96/4/EC. En effet, la détection immunitaire de la protéine βLG hydrolysée, par des anticorps anti-peptide-N-terminale-βLG, est seulement environ 10 fois inférieure à celle de la protéine βLG native (voir les figures 2 et 3). A la différence de EP629350, JP 3-181681 fait le postulat que plus une protéine allergique est native, mais quant même légèrement hydrolysée pour la rendre un peu hypoallergénique, plus cette protéine hydrolysée peut induire une tolérance à cette protéine native. Ce raisonnement rejoint les travaux de Husby S. et al. cités plus haut, où l'administration orale de protéines intactes a été reconnue comme un moyen efficace pour induire une tolérance immunologique à ces protéines.

En considérant les limitations et imperfections de la technique antérieure pour obtenir des hydrolysats de lait avec un pouvoir allergisant fortement réduit, capables d'induire la tolérance au lait de vache chez un patient, il est apparent qu'il existe encore un besoin pour identifier les hydrolysats anallergisants de lait, qui sont les plus appropriés pour induire la tolérance au lait de vache. La présente invention vise en particulier à trouver une voie médiane entre les deux approches développées dans EP629350 et JP 3-181681.

### Résumé de l'invention

A cet effet, l'invention concerne l'utilisation d'un petit-lait, présentant une degré d'hydrolyse enzymatique de 15-19% et un niveau de détection immunologique des protéines allergènes au moins 100 fois inférieure à celui d'un petit-lait non-bydrolysé, pour la fabrication d'une composition destinée à induire la tolérance orale chez des mamifères qui sont susceptibles d'être allergiques au lait de vache.

Contrairement à EP629350 et JP 3-181681, et contre toutes attentes, les meilleures résultats d'induction de la tolérance au lait de vache sont obtenues pour des laits hypoallergéniques moyennement hydrolysés.

En-effet, au plus l'hydrolyse est poussée à des degrés supérieurs à 20%, au moins l'induction d'une tolérance orale est significative.

De même, au moins l'hydrolyse est poussée, c'est à dire en dessous de 15% de degré d'hydrolyse, au moins l'on obtient une bonne induction de la tolérance et une hypoallergénicité conforme à la directive 96/4/EC. JP 3-181681 montre en effet qu'un petit-lait hydrolysé non-hypoallergénique peut induire une tolérance telle que le niveau d'anticorps anti-βLG est seulement 5 à 10 fois inférieur au contrôle.

### Brève description des dessins

La Figure 1 montre que la même tolérance orale au niveau des IgE, dépendant de la dose, est obtenue lorsqu'on ingère des quantités différentes d'une composition non-hydrolysée (composition standard: NAN®) ou d'une composition hydrolysée selon l'invention (composition préventive BEBA-HA®).

La Figure 2 montre que la composition standard (NAN®) et la composition préventive (BEBA-HA®) ont l'activité suppressive la plus efficace au niveau spécifique de l'IgE anti-βLG spécifique.

La Figure 3 montre que des courbes de libération dépendant de la dose peuvent être obtenues avec des mastocystes sensibilisés passivement avec du sérum d'animaux nourris avec la composition thérapeutique ou de l'eau, alors que les mastocystes sensibilisés passivement au moyen de sérum de rats nourris au NAN® ou au BEBA-HA® ne libèrent pas de ³H-sérotonine lorsqu'ils sont déclenchés au moyen de βLG.

La Figure 4 montre le pouvoir tolérogène de l'hydrolysat d'alcalase HALAL-HA® par rapport à l'hydrolysat de trypsine BEBA-HA®.

### Description détaillée de l'invention

Afin de mieux comprendre la nature de la présente invention, la terminologie suivante est définie.
- Tolérance : état de non-réponse immunologique spécifique. Les deux voies humorale (anticorps) et à médiation cellulaire (lymphocytes...) de la réponse immunitaire peuvent être supprimées par l'induction de la tolérance. Un échec de la tolérance orale est considéré comme étant la cause sous-jacente de l'allergie alimentaire.
- Allergène : protéine ou macropeptide capable d'initier des réactions allergiques chez l'homme, en particulier les nourrissons et nouveau-nés sensibles.
- Hypoallergénique: état d'un lait hydrolysé qui est conforme à la directive Européenne 96/4/EC.

Le matériel de départ pour préparer un petit-lait selon l'invention peut être un petit-lait provenant de la préparation du fromage, en particulier un petit-lait doux comme celui qui résulte de la coagulation de la caséine par la présure, un petit-lait acide provenant de la coagulation de la caséine par un acide, ou des ferments acidifiants, ou même un petit-lait mixte résultant de la coagulation par un acide et par la présure.

Ce petit-lait peut être hydrolysé par la trypsine comme décrit d'une manière détaillée dans le brevet US5039532.

Un hydrolysat enzymatique alternatif suivant la présente invention est celui obtenu par traitement des protéines de petit-lait avec l'enzyme alcalase. L'alcalase (subtilisine A) est d'origine bactérienne (Bacillus licheniformis). Elle peut être utilisée dans le procédé de US5039532.

Les produits préférés ont un taux d'hydrolyse d'environ 16-19% et une teneur totale en azote (Nt) d'environ 3-4 %. L'analyse par electrophorèse SDS-PAGE doit de préférence confirmer l'absence de bandes protéiques. En particulier, on n'observe aucune bande correspondant à la SAB, aux chaînes H et L de l'IgG, à l'αLA et à la βLG, par exemple

Un produit préféré comprend du matériel protéique hydrolysé de petit lait, à partir duquel des allergènes choisis dans un groupe d'allergènes consistant en l'α-lactalbumine, la β-lactoglobuline, la sérumalbumine et les immunoglobulines n'ont pas été éliminés et dans lequel le matériau protéique hydrolysé, y compris les allergènes hydrolysés, se présentent sous forme de résidus d'hydrolyse ayant un poids moléculaire non supérieur à environ 10 000 Dalton, de sorte que le matériau hydrolysé est sensiblement exempt de protéines allergènes et d'allergènes d'origine protéique.

L'analyse de petits-laits hypoallergéniques, pouvant être fabriqués selon le procédé de US5039532 et présentant divers degrés d'hydrolyse, a permi de mettre en évidence que les meilleures activités de tolérance sont obtenues pour les petits-laits ayant un degré d'hydrolyse de 15 à 19, le degré d'hydrolyse étant calculé par le rapport, multiplié par 100, entre le nombre de groupes NH2 libres et le nombres total de groupes NH et NH2 (voir également EP629350, p.4, 1.1-5).

L'hypoallergénicité du petit-lait selon l'invention peut être déterminée en fonction du niveau de détection immunologique des protéines allergènes, qui doit être au moins 100 fois inférieur à celui d'un petit-lait non-bydrolzrsé. Cette détection peut être simplement effectuée par un test Elisa avec des anticorps anti-protéines allergiques de vache, comme la protéine native βLG, par exemple.

En particulier, l'hypoallergénicité du petit-lait selon l'invention peut être déterminée en fonction de la capacité du petit-lait selon l'invention à déclencher un niveau de libération de sérotonine ³H par des mastocytes, sensibilisés passivement par un antisérum anti-protéine de lait de vache, qui est au moins 200 fois inférieur à celui obtenu par ces mêmes mastocytes avec un petit-lait non-hydrolysé. Les meilleures petits-laits hypoallergéniques selon l'invention sont obtenus lorsque ce niveau de déclenchement est inférieur à 500 fois, par exemple. L'homme du métier dispose de la technique développée par Fritsche et al. pour déterminer ces niveaux de libérations de sérotonine.

Contre toutes attentes, les petits-laits hypoallergéniques selon l'invention ayant les meilleures capacités d'induction de la tolérance au lait de vache, présentent un degré d'hydrolyse de 16 à 19%, par exemple. Cette induction de la tolérance orale au lait de vache est de préférence telle, que le niveau d'IgE anti-protéines allergisantes de vache, produit en réaction à une administration de protéines allergisantes de vache, est diminué d'au moins d'un facteur 100, voire 500, par exemple.

L'hydrolysat selon l'invention peut être séché, par exemple par séchage par pulvérisation où par lyophilisation. Il est alors incorporé dans de nombreuses préparations alimentaires à usage diététique, en particulier dans des aliments pour nourrissons ou dans des aliments facilement résorbables à utiliser chez les personnes souffrant d'allergies. A titre d'exemple, la composition commerciale en poudre BEBA-HA® (Société des Produits Nestlé, Suisse) est un produit selon l'invention capable d'induire une tolérance orale.

La composition est administrée de la même manière que les formulations classiques anallergisantes de lait. Pour une induction maximale de la tolérance, cependant, le petit-lait hydrolysé enzymatiquement doit être administré avant qu'une attaque allergène n'induise de sensibilisation immunologique spécifique aux protéines de lait de vache.

La présente invention est décrite plus en détail ci-après à l'aide du complément de description qui va suivre, qui se réfère à des exemples de mise en évidence d'une induction de la tolérance orale par des petits-laits selon l'invention. Les pourcentages sont donnés en poids sauf indication contraire. Il va de soi, toutefois, que ces exemples sont donnés à titre d'illustration de l'objet de l'invention dont ils ne constituent en aucune manière une limitation.

### Exemple 1

Les compositions hypoallergéniques de lait de vache selon l'invention sont capables de prévenir l'apparition d'anticorps réaginiques aux protéines de lait de vache lorsqu'on les administre oralement avant et pendant la sensibilisation allergène. Cette induction de la tolérance orale est montrée chez les rats avec des compositions hypoallergéniques préventives, mais pas avec les compositions hypoallergéniques thérapeutiques ayant un degré d'hydrolyse poussé.

Pour vérifier l'induction de la tolérance, des rats Sprague-Dawley (âgés de 5 à 6 sem.), élevés sous un régime "exempt de lait", sont nourris d'alimentation solide granulaire "exempte de lait", et *ad libitum* de différentes compositions liquides expérimentales de lait, dans des biberons, les jours 1 à 19. On immunise tous les animaux (s.c.) au moyen de βLG + OVA + Alumine(OH)³ au jour 5 et on les saigne au jour 19. On titre ensuite par ELISA les IgE et IgG spécifiques de rats, anti-βLG et anti-OVA.

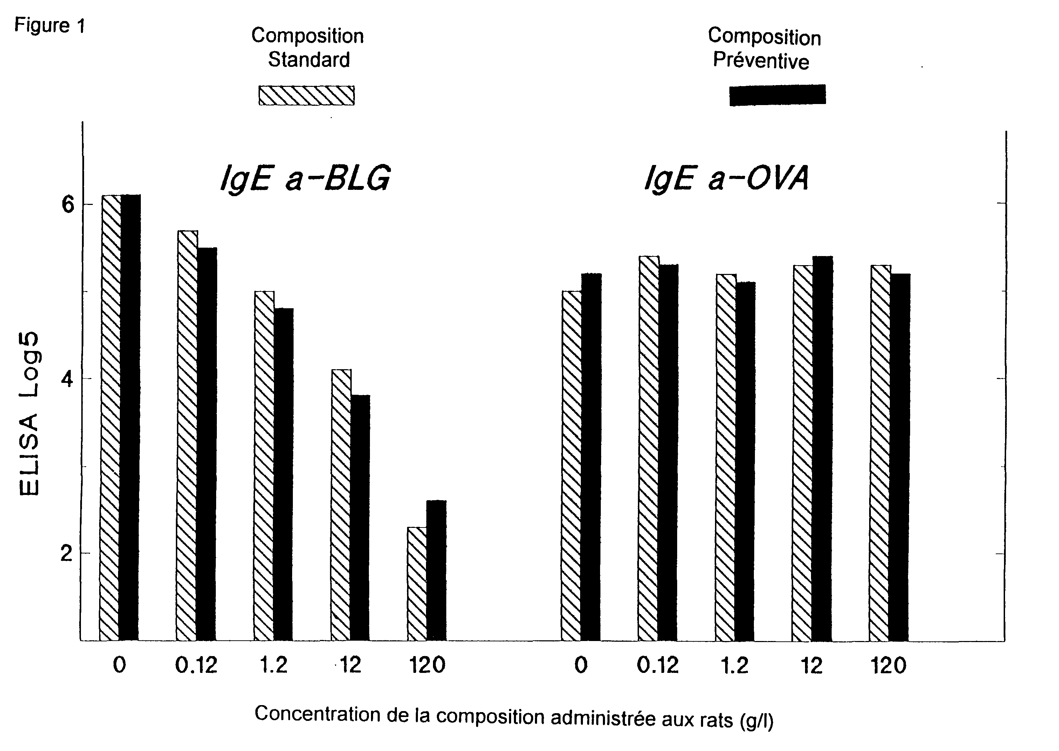

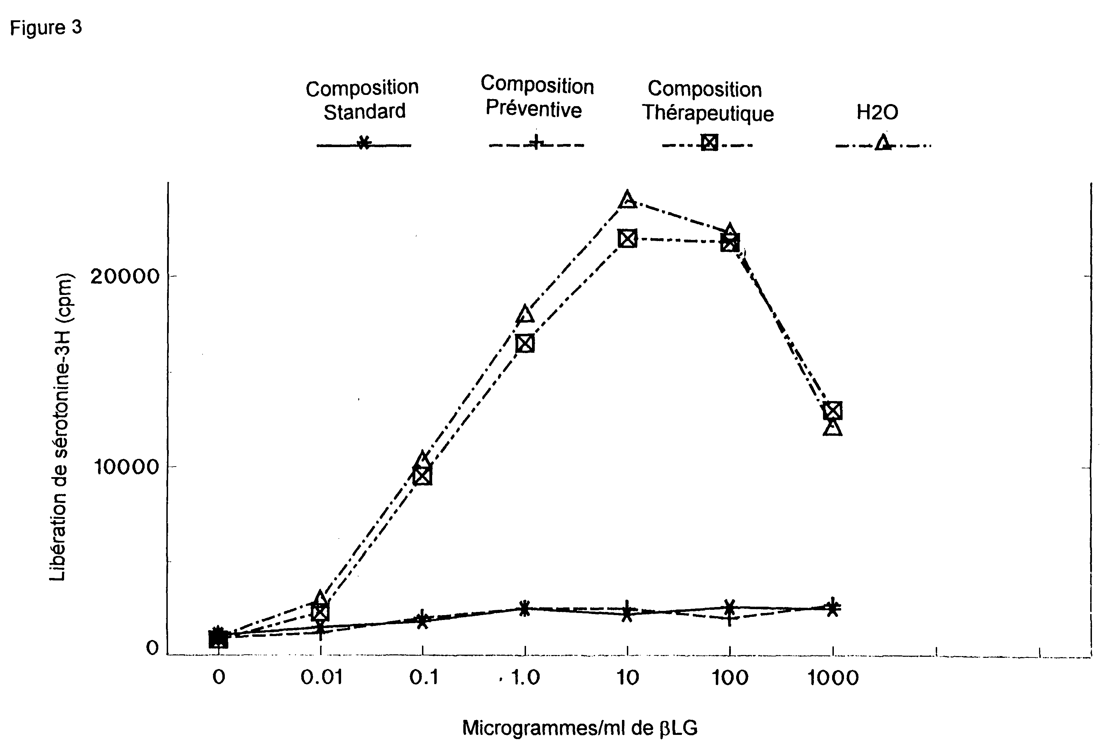

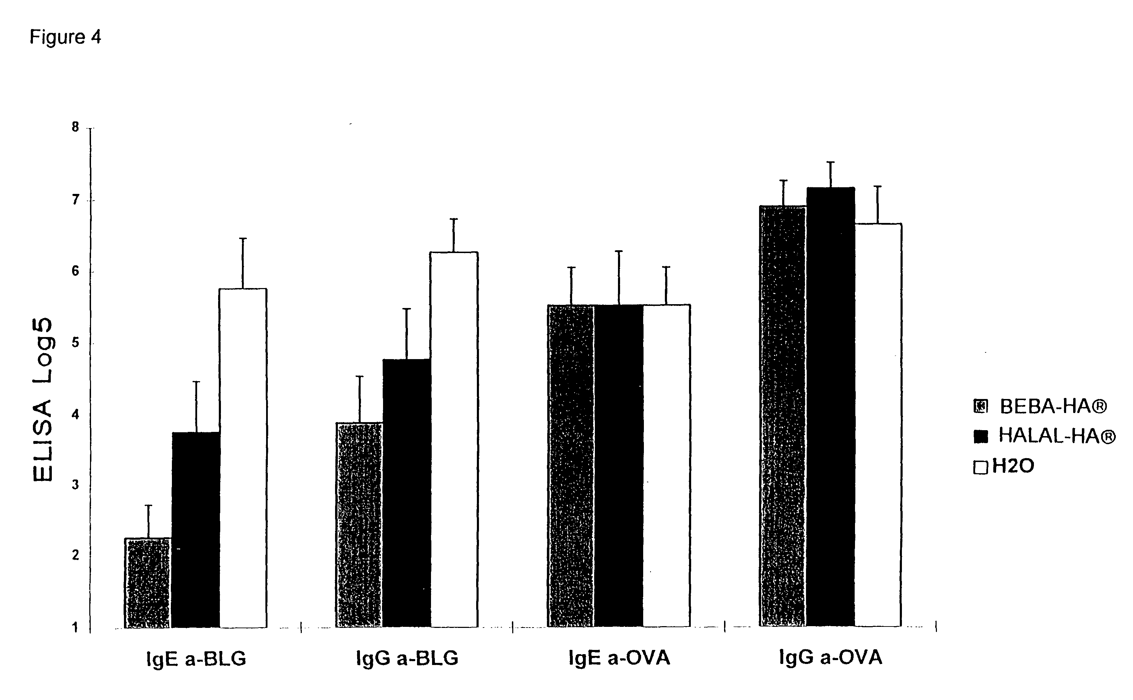

On détermine aussi l'activation au niveau des mastocystes au moyen de mastocystes péritonéaux de rats normaux, qui sont passivement sensibilisés par des groupes de sérums de rats nourris de différentes compositions de lait. Les cellules sensibilisées et lavées sont marquées à la ³H-sérotonine et stimulée pour la libération du médiateur, selon le protocole de Fritsche et al. (Int. Arch. Allergy Appl. Immunol. 93, 289-93, 1990), en ajoutant différentes quantités d'agent déclencheur (βLG).
a) Suppression spécifique d'anticorps par l'ingestion de compositions de lait: la figure 1 montre que l'on obtient la même tolérance orale en fonction de la dose, au niveau des IgE, lorsqu'on donne différentes quantités du petit-lait non-hydrolysée standard NAN® (Société des Produits Nestlé, Suisse) ou du petit lait préventif BEBA-HA®. On peut voir que l'administration orale des deux préparations de lait à 120 g/litre induit la suppression la plus élevée d'anticorps (réduction de plus de 200 fois du taux d'anticorps IgE anti-βLG), lorsqu'on compare aux témoins (animaux nourris à l'eau). En outre, les anticorps d'un antigène sans rapport (OVA) ne sont pas supprimés par l'ingestion de compositions de lait, indiquant que cette induction de la tolérance orale est spécifique de l'allergène. En conclusion, la tolérance orale induite par le petit-lait BEBA- HA®, est spécifique des allergènes de lait. Cette tolérance est comparable à celle obtenue avec un petit-lait natif, sans les inconvénients de déclenchement d'une allergie.
b) Comparaison de l'induction de la tolérance avec différentes compositions: on compare différentes qualités de compositions de lait de vache pour l'induction de la tolérance orale, à savoir le petit-lait non-hydrolysé commercial NAN®; le petit-lait hypoallergénique préventif à 18% d'hydrolyse BEBA-HA®; le petit-lait hypoallergénique préventif HALAL-HA® (Société des Produits Nestlé, Suisse) ayant environ 21% d'hydrolyse, obtenu selon le protocole décrit dans US5039532 avec de l'alcalase; et le petit-lait hypoallergénique thérapeutique ALFARE® ayant 28% d'hydrolyse. Tous ces laits sont hypoallergéniques, c'est à dire sont conformes à la directive Européenne 96/4/EC. Ils remplissent aussi la condition d'hypoallergénicité définie par le protocole de Fritsche et al. (au moins 200 fois moins de libération de sérotonine par rapport à un témoin).

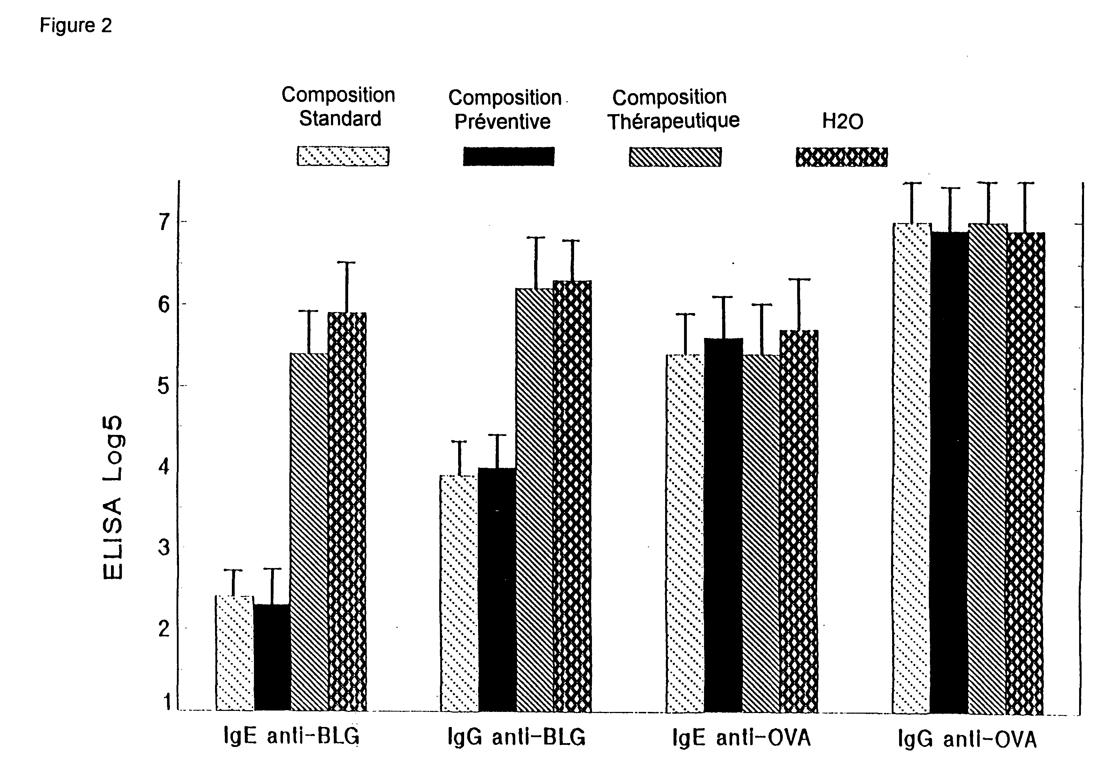

   - La figure 2 montre que la composition standard NAN® et la composition préventive BEBA-HA® ont l'activité suppressive la plus efficace au niveau spécifique de l'IgE anti-βLG, à savoir qu'elles induisent une diminution de la réponse IgE d'un facteur 100.
      Au contraire, la composition thérapeutique ALFARE® (Société des Produits Nestlé, Suisse), qui est un petit-lait hypoallergénique ayant un degré d'hydrolyse de 28%, n'a presque aucune activité tolérogène si on la compare aux témoins (alimentation à l'eau).
      L'effet des compositions données sur la réponse de l'IgG anti-βLG est plus faible, mais le même schéma comparatif que celui obtenu pour la modulation de l'IgE est observé.
      Les taux en anticorps témoins IgE et IgG anti-OVA restent inchangés.
   - Comme le montre la Figure 4, des rats préalablement nourris avec l'hydrolysat d'alcalase, HALAL-HA® suppriment la réponse spécifique IgE et IgG anti-βLG alors que la réponse à un antigène sans rapport (OVA) n'est pas modifiée. Comparé au BEBA-HA®, la suppression de l'anti-βLG est plus faible lorsque les rats sont rendus tolérants par HALA-HA® (réduction d'IgE d'environ 25 fois). Ceci peut être relié au fait que l'on obtient des peptides plus petits dans les hydrolysats d'alcalase par rapport aux hydrolysats de trypsine ou que plusieurs peptides tolérogènes sont manquants.
c) Suppression de la sécrétion in vitro des mastocystes: on marque des mastocystes de rats normaux avec de la ³H-sérotonine et on les sensibilise passivement au moyen de sérums de rats rendus tolérants par une alimentation avec des compositions de lait. Le déclenchement de la libération de médiateur est réalisé avec la βLG. La figure 3 montre que des courbes de libération dépendant de la dose peuvent être obtenues avec des mastocystes passivement sensibilisés avec des sérums d'animaux nourris par la composition thérapeutique ou par de l'eau, alors que les mastocystes passivement sensibilisés avec des sérums de rats nourris par la composition standard ou la composition préventive BEBA-HA® ne libèrent pas de ³H-sérotonine lorsqu'ils sont déclenchés par la βLG.

### Exemple 2

On nourrit des cochons d'Inde Dunkin-Hartley du jour 1 à 35 au moyen de BEBA-HA® ou d'eau. On traite alors tous les animaux, de manière orale, (jours 36-49) par le NAN®. Les résultats montrent que les cochons d'Inde nourris préalablement au BEBA-HA® ont supprimé les titres en anticorps réaginiques anti-protéines de petit lait, comparés aux animaux préalablement nourris à l'eau.

### Exemple 3

On conduit les mêmes tests que ceux décrits à l'exemple 1, à la différence près que l'on détecte les anticorps anti-caséine. Les résultats sont similaires et conduisent à la conclusion qu'en plus de la supression de la réponse à la βLG, la réponse à la caséine est également supprimée chez les rats rendus tolérants par le BEBA-HA®.

### Exemple 4

On prépare des petits-laits selon le protocole décrit dans US5039532, qui présentent un degré d'hydrolyse enzymatique de l'ordre de 11%, 13%, 15%, 23% ou 25%. Des essais similaires à ceux présentés à l'exemple 1 sont conduits sur ces petits-laits.

Les résultats montrent clairement que, plus on pousse l'hydrolyse au dessus d'un degré de 20%, plus les niveaux d'induction d'une tolérance orale à la βLG diminuent. Ces résultats sont conformes à ceux obtenus à l'exemple 1, où l'on obtient une moins bonne tolérance avec le petit-lait HALAL-HA® et quasiment aucune réponse avec le petit-lait ALFARE®, en comparaison à celui obtenu avec le BEBA-HA®.

De même, les résultats montrent qu'en dessous d'un degré d'hydrolyse de 15%, il n'est pas vraiment possible d'atteindre une hypoallergénicité conforme à la directive Européenne 96/4/EC. Le niveau d'induction de la tolérance par les petits-laits à 11% et 13% de degré d'hydrolyse, est comparable à celui décrit dans JP 3-181681 pour un petit-lait hydrolysé non-hypoallergénique.

En conclusion, au regard de tous les exemples précédents, (1) l'administration orale de petits-laits hypoallergéniques ayant un degré d'hydrolyse de 15-20%, avant l'attaque allergène, induit une tolérance immunologique spécifique aux protéines de lait de vache. (2) Les réponses des anticorps (IgE, IgG) ainsi que celles des mastocystes (péritonéaux, intestinaux) sont supprimées. (3) L'activité tolérogène orale de ces compositions est associée aux peptides tryptiques (1-10 kd). (4) Une composition hydrolysée de manière extensive (ALFARE®) n'induit pas de tolérance orale.

La dernière conclusion démontre, de manière assez inattendue, que le pouvoir non allergisant le plus élevé ne traduit pas une capacité maximale à induire la tolérance au lait.

## Revendications

1. Utilisation d'un petit-lait présentant un degré d'hydrolyse enzymatique de 15-19% et un niveau de détection immunologique des protéines allergènes au moins 100 fois inférieure à celui d'un petit-lait non-hydrolysé, pour la fabrication d'une composition destinée à induire la tolérance orale chez des mamiferes qui sont susceptibles d'être allergiques au lait de vache.

2. Utilisation d'un petit-lait selon la revendication 1, pour la fabrication d'une composition alimentaire destinée à induire la tolérance orale chez des mamifères n'ayant pas été encore en contact avec des allergènes de lait de vache qui sont susceptibles d'être allergiques au lait de vache.

3. Utilisation selon la revendication 1, **caractérisée en ce que** le petit-lait hydrolysé est capable de déclencher un niveau de libération de sérotonine ³H par des mastocytes, sensibilisés passivement par un antisérum anti-protéine de lait de vache, au moins 200 fois inférieur à celui obtenu par ces mêmes mastocytes avec un petit-lait non-hydrolysé.

4. Utilisation selon la revendication 1, **caractérisée en ce que** le petit-lait présente un degré d'hydrolyse de 16 à 19%.

5. Utilisation selon l'une des revendications 1 à 4, **caractérisé en ce que** on induit une tolérance telle que le niveau d'IgE anti-protéines allergisantes de vache, produit en réaction à une administration de protéines allergisantes de vache, est diminué d'au moins 100 fois.

6. Utilisation selon la revendication 5, **caractérisée en ce que** l'on induit une tolérance orale chez des enfants.

7. Utilisation selon la revendication 6, pour préparer une composition alimentaire sous forme sèche.

## Patentansprüche

1. Verwendung von Molke mit einem Grad der enzymatischen Hydrolyse von 15-19% und einem Anteil an immunologisch nachweisbaren allergenen Proteinen, der 100mal kleiner als der von nichthydrolysierter Molke ist, für die Herstellung einer Zusammensetzung, die dazu bestimmt ist, bei Säugern, die gegenüber Kuhmilch allergisch sein können, eine orale Toleranz zu induzieren.

2. Verwendung von Molke nach Anspruch 1 für die Herstellung einer Nahrungsmittelzusammensetzung, die dazu bestimmt ist, bei Säugern, die gegenüber Kuhmilch allergisch sein können und die noch nicht mit Milchallergenen in Kontakt gekommen sind, eine orale Toleranz zu induzieren.

3. Verwendung nach Anspruch 1, **dadurch gekennzeichnet, dass** die hydrolysierte Molke eine 3H-Serotonin-Freisetzung aus Mastozyten, die durch ein Antikuhmilchprotein-Antiserum passiv sensibilisert sind, in einem Ausmaß bewirken kann, das mindestens 200mal geringer ist als das bei denselben Mastozyten durch eine nichthydrolysierten Milch erhaltene Ausmaß.

4. Verwendung nach Anspruch 1, **dadurch gekennzeichnet, dass** die Molke einen Hydrolysegrad von 16 bis 19% besitzt.

5. Verwendung nach einem der Ansprüche 1 bis 4, **dadurch gekennzeichnet, dass** eine solche Toleranz induziert wird, dass das Niveau von IgE anti-allergisierende Kuhproteine, die als Reaktion auf eine Verabreichung von allergisierenden Kuhproteinen gebildet werden, mindestens hundertfach reduziert ist.

6. Verwendung nach Anspruch 5, **dadurch gekennzeichnet, dass** man eine orale Toleranz bei Kindern induziert.

7. Verwendung nach Anspruch 6 für die Herstellung einer Nahrungsmittelzusammensetzung in trockener Form.

## Claims

1. Use of a whey having a degree of enzyme hydrolysis of 15-19% and an immunological detection level for allergenic proteins at least 100 times lower than that of a non-hydrolysed whey, for the production of a composition designed to induce oral tolerance in mammals which are likely to be allergic to cow's milk.

2. Use of a whey according to claim 1 for the production of a food composition designed to induce oral tolerance in mammals which, not yet having been in contact with cows milk allergens, are likely to be allergic to cows milk.

3. Use according to claim 1, **characterized in that** the hydrolysed whey is capable of initiating a level of liberation of serotonin ³H by mastocytes, passively sensitised by antiprotein antiserum of cows milk, at least 200times lower than that obtained by the same mastocytes with a non-hydrolysed whey.

4. Use according to claim 1, **characterized in that** the whey has a degree of hydrolysis of 16 to 19%.

5. Use according to one of claims 1 to 4, **characterized in that** a tolerance is induced such that the level of allergenic bovine antiprotein IgE, produced in reaction to an administration of allergenic bovine proteins, is reduced by at least 100 times.

6. Use according to claim 5, **characterized in that** oral tolerance is induced in infants.

7. Use according to claim 6 for preparing a food composition in a dry form.
